# FASCICULE DE BREVET EUROPEEN

(11) **EP 2 921 753 B1**
(45) Date de publication et mention de la délivrance du brevet: **28.06.2017**
(21) Numéro de dépôt: 14161166.5
(22) Date de dépôt: 21.03.2014
(51) Int. Cl.: F16K 39/02

(54) **Electrovanne aérospatiale pour gaz croygénique haute pression**
Raumfahrt-Magnetventil für kryogenes Hochdruckgas
Aerospace solenoid valve for high-pressure cryogenic gas

(43) Date de publication de la demande: 23.09.2015
(73) Titulaire: Safran Aero Boosters SA, 4041 Herstal (BE)
(72) Inventeur: Vandenplas, Xavier, 4020 Liège (BE); Frippiat, Cédric, 4910 Jehanster (BE)
(74) Mandataire: Lecomte & Partners

(56) Documents cités:
- WO-A2-2008/050227
- DE-A1- 1 916 876

## Description

### Domaine technique

L'invention a trait à une vanne pour gaz avec un obturateur auxiliaire dans un obturateur principal. L'invention a également trait à une électrovanne avec un solénoïde dont le plongeur baigne dans le fluide.

### Technique antérieure

Afin de commander la distribution d'un fluide, les circuits de distribution sont munis d'électrovannes. Une électrovanne est généralement munie d'un actionneur, par exemple un solénoïde qui entraîne un obturateur d'une vanne entre une position fermée et une position ouverte. Par mesure de sécurité, l'électrovanne peut être configurée de sorte que la pression du fluide la maintienne fermée. Dans ce cas, la pression exerce un effort de fermeture contre l'obturateur qui est proportionnel à ladite pression. En réponse, l'électrovanne doit être dimensionnée de sorte à contrebalancer l'effort de fermeture.

Dans le contexte d'une application haute pression, le solénoïde doit être massif et lourd pour fournir un effort d'ouverture suffisant. Cet impact sur la masse devient critique lors d'une intégration dans un aéronef. Un besoin existe donc pour réduire l'effort d'ouverture. Une solution connue consiste à scinder l'obturateur ; en un obturateur principal et en un obturateur auxiliaire qui ouvre et ferme une ouverture dans l'obturateur principal. Cette ouverture est configurée de sorte à créer un équilibre de pression de part et d'autre de l'obturateur principal pour en faciliter l'actionnement. L'effort d'ouverture devient réduit car la différence de pression ne s'applique que sur l'obturateur auxiliaire, dont par essence, les dimensions sont réduites.

Le document US4928733 A divulgue une vanne avec un corps principal, un obturateur principal et un obturateur auxiliaire. L'obturateur principal comprend un perçage inférieur que l'obturateur auxiliaire peut fermer. Ce dernier est également apte à entraîner dans les sens d'ouverture et de fermeture l'obturateur principal. La fermeture et l'entraînement en fermeture s'effectue à l'aide d'une tête de l'obturateur auxiliaire. La vanne comprend un guide pour accompagner l'obturateur principal en plus de la tige de l'obturateur auxiliaire sur laquelle il coulisse. Lors de l'ouverture de l'obturateur auxiliaire, un écoulement de fuite s'effectue entre l'obturateur principal et son guide. Ensuite, l'équilibre des pressions autour de l'obturateur auxiliaire s'effectue à l'aide de canaux axiaux réalisés dans la masse de l'obturateur principal.

Cette vanne permet de réduire l'effort d'ouverture. Or, son architecture est onéreuse à réaliser. Elle présente des formes complexes et une portion disposée dans une cavité peu accessible. Par ailleurs, l'ouverture est peu progressive. Dans le contexte d'une application pour gaz haute pression, le mouvement d'ouverture de l'obturateur auxiliaire et génère un pic de pression qui peut endommager des équipements associés.

Le document DE1916876 A1 divulgue une vanne comprenant un corps dans lequel se déplace un obturateur principal avec un siège. La vanne présente en outre un obturateur auxiliaire logé dans l'obturateur principal afin d'en clore le siège. A cet effet, l'obturateur principal montre une chambre recevant l'obturateur auxiliaire. Cette dernière est délimitée par une plaque d'entrainement contre laquelle l'obturateur auxiliaire prend appui lors du mouvement d'ouverture. Or cette configuration est complexe et coûteuse.

Le document WO2008/050227 A2 divulgue une vanne pour un équipement électroménager dans lequel circule de l'eau en vue de préparer une boisson chaude. La vanne comprend un corps évidé avec une entrée reliée à une sortie par un passage, et un obturateur principal coopérant avec la sortie du corps. L'obturateur principal est également évidé et montre une traversée reliant une autre entrée à une autre sortie ; qui elle est fermée par un obturateur auxiliaire. Le passage de l'obturateur principal est matérialisé par une cage qui renferme une tête de l'obturateur auxiliaire et qui montre une extrémité avec un rebord intérieur afin d'être tirée dans le sens de l'ouverture par la tête de l'obturateur auxiliaire.

### Résumé de l'invention

### Problème technique

L'invention a pour objectif de résoudre au moins un des problèmes techniques soulevés par l'art antérieur. Plus précisément, l'invention a pour objectif de rendre le mouvement d'ouverture d'une vanne avec un obturateur principal et un obturateur auxiliaire plus progressif. L'invention a également pour objectif de ralentir le début de l'ouverture d'une vanne avec un obturateur principal et un obturateur auxiliaire.

### Solution technique

L'invention a pour objet une vanne, notamment pour gaz cryogénique, la vanne comprenant un corps avec une entrée principale, une sortie principale et un passage principal qui relie l'entrée principale à la sortie principale; un obturateur principal du passage principal, l'obturateur principal comportant une entrée auxiliaire, une sortie auxiliaire en communication avec la sortie principale, et un passage auxiliaire qui relie l'entrée auxiliaire à la sortie auxiliaire, un obturateur auxiliaire comprenant une surface de fermeture configurée pour couper le passage auxiliaire et pour entraîner l'obturateur principal dans le sens de fermeture, remarquable en ce que l'obturateur auxiliaire comprend, en outre, une surface d'entraînement configurée pour entraîner l'obturateur principal dans le sens de l'ouverture en prenant appui sur le bord de l'entrée auxiliaire et en la bouchant partiellement afin d'y freiner un écoulement.

Suivant un mode avantageux de l'invention, l'obturateur auxiliaire comprend au moins une patte d'entraînement faisant saillie transversalement par rapport à la direction de déplacement de l'obturateur auxiliaire, la surface d'entraînement étant disposée sur la au moins une patte d'entraînement.

Suivant un mode avantageux de l'invention, le bord de l'entrée auxiliaire de l'obturateur principal comprend au moins une encoche dont le contour correspond à celui de la au moins une patte d'entraînement de sorte à permettre l'insertion de chaque patte d'entraînement à l'intérieur du passage auxiliaire, la patte d'entraînement étant décalée angulairement par rapport à l'encoche.

Suivant un mode avantageux de l'invention, l'obturateur auxiliaire comprend plusieurs pattes d'entraînements réparties angulairement autour de l'obturateur auxiliaire, chacune avec une portion de surface d'entraînement, préférentiellement l'obturateur principal comprend des encoches associées aux pattes d'entraînement de sorte à former un accouplement baïonnette.

Suivant un mode avantageux de l'invention, l'obturateur auxiliaire comprend une tige de commande traversant l'entrée auxiliaire, et une tête sur laquelle est formée la surface de fermeture, la surface d'entraînement étant reliée à la tige de commande via la tête.

Suivant un mode avantageux de l'invention, la tête s'étendent sur la majorité de la section de passage de l'entrée auxiliaire, et/ou la tête occupe la majorité du volume du passage auxiliaire.

Suivant un mode avantageux de l'invention, le contour de la tête épouse le contour de l'entrée auxiliaire, la tête étant configurée de sorte à ce que lorsque la surface d'entraînement est en contact de l'obturateur principal, la tête est au niveau axialement de l'entrée auxiliaire de sorte à y créer une perte de charge.

Suivant un mode avantageux de l'invention, le passage auxiliaire présente généralement une forme de disque, l'obturateur auxiliaire occupant la majorité du volume du disque.

Suivant un mode avantageux de l'invention, l'entrée auxiliaire présente un espace qui entoure l'obturateur auxiliaire, le bord de l'entrée auxiliaire forme un rétrécissement annulaire au niveau du passage auxiliaire.

Suivant un mode avantageux de l'invention, l'obturateur auxiliaire comprend une portion d'entraînement, la surface de fermeture et la surface d'entraînement étant disposées sur des faces axialement opposées de la portion d'entraînement et qui sont orientées dans des sens opposés auxdites surfaces.

Suivant un mode avantageux de l'invention, la vanne comprend un guide principal pour guider l'obturateur principal à l'aide d'une cloison de guidage sur laquelle glisse l'obturateur principal, l'obturateur principal étant majoritairement enveloppé dans la cloison de guidage dans la position fermée, le contact entre l'obturateur principal et le guide principal est généralement étanche, préférentiellement le contact étanche est configuré pour permettre un écoulement de fluide à partir d'une pression supérieure à 50 bars, plus préférentiellement supérieure à 100 bars.

Suivant un mode avantageux de l'invention, la cloison de guidage comprend un orifice disposé à distance de l'obturateur principal lorsque ce dernier est en position fermée, préférentiellement l'orifice est fermé lorsque l'obturateur principal est en position ouverte.

Suivant un mode avantageux de l'invention, le passage principal comprend deux parois opposées selon le sens de déplacement de l'obturateur principal, la cloison de guidage s'étend depuis une paroi vers l'autre paroi jusqu'à une distance D de l'autre paroi, la distance D étant inférieure à la course de l'obturateur principal et/ou de l'obturateur auxiliaire entre sa/leur position ouverte et sa/leur position fermée, préférentiellement en position ouverte, l'obturateur principal et le guide principal définissent une enceinte généralement close.

Suivant un mode avantageux de l'invention, le passage principal comprend une chambre principale dans laquelle est logé l'obturateur principal, l'obturateur principal étant mobile en translation d'une extrémité à l'autre de la chambre principale.

Suivant un mode avantageux de l'invention, la surface de fermeture et/ou la surface d'entraînement sont d'un seul tenant et/ou est/sont lisse(s).

Suivant un mode avantageux de l'invention, la vanne est une vanne haute pression.

Suivant un mode avantageux de l'invention, la sortie auxiliaire est en communication, éventuellement directe, avec la sortie principale.

Suivant un mode avantageux de l'invention, la sortie auxiliaire est un canal traversant l'obturateur principal.

Suivant un mode avantageux de l'invention, chaque patte d'entraînement est disposée à l'intérieur du passage auxiliaire.

Suivant un mode avantageux de l'invention, la tête présente une largeur supérieure à la tige de commande et une taille inférieure à l'entrée auxiliaire.

Suivant un mode avantageux de l'invention, la tête s'étend sur la majorité axiale du passage auxiliaire.

Suivant un mode avantageux de l'invention, le passage auxiliaire est disposé dans la portion aval de l'obturateur principal. La portion aval est la portion du côté de la sortie auxiliaire.

Suivant un mode avantageux de l'invention, la sortie auxiliaire forme une extrémité axiale de l'obturateur principal.

Suivant un mode avantageux de l'invention, chaque guide s'étend axialement sur la majorité de l'obturateur associé.

Suivant un mode avantageux de l'invention, l'obturateur principal et l'obturateur auxiliaire sont chacun venus de matière.

Suivant un mode avantageux de l'invention, la vanne est configurée pour que le sens de fermeture de l'obturateur auxiliaire corresponde au sens de fermeture de l'obturateur principal.

Suivant un mode avantageux de l'invention, l'obturateur principal est disposé entre les parois opposées du passage principal.

L'invention a également trait à une électrovanne comprenant une vanne pour gaz, remarquable en ce que la vanne est conforme à l'invention, l'électrovanne comprend un actionneur électromagnétique avec au moins un solénoïde, un circuit magnétique pour canaliser le flux magnétique du solénoïde, le circuit comportant un noyau ferromagnétique et un plongeur ferromagnétique auquel est relié l'obturateur auxiliaire, l'électrovanne étant configurée de sorte que dans l'état fermé, la différence de pression entre l'entrée principale et la sortie principale exerce un effort de fermeture sur le plongeur qui maintient l'électrovanne fermée à l'aide de l'obturateur principal et de l'obturateur auxiliaire.

### Avantages apportés

L'invention permet de contrôler l'ouverture de la vanne. Cette ouverture se fait en deux temps, le premier temps s'effectuant tout en contrôlant le flux auxiliaire au travers de l'obturateur principal grâce à la surface d'entraînement. Celle-ci joue un rôle de masque qui régule l'écoulement de l'entrée auxiliaire.

La cavité délimitée par l'obturateur principal et son guide forment un réservoir de fluide employé pour freiner l'ouverture de l'obturateur principal. En effet, dans ce mouvement le fluide est freiné grâce aux pattes qui obstruent l'écoulement via l'entrée auxiliaire.

L'homme du métier est encouragé à améliorer encore chacun des avantages précités.

### Brève description des dessins

La figure 1 représente la vanne en position fermée selon l'invention.
La figure 2 illustre un agrandissement des obturateurs, l'obturateur auxiliaire étant en position fermée selon l'invention.
La figure 3 esquisse une coupe des obturateurs selon l'axe 3-3 tracé sur la figure 2 selon l'invention.
La figure 4 représente la vanne dans une position intermédiaire où l'obturateur principal est en position fermée et où l'obturateur auxiliaire est en position ouverte selon l'invention.
La figure 5 représente la vanne dans une position où ses obturateurs sont tous deux en position ouverte selon l'invention.

### Description des modes de réalisation

Dans la description qui va suivre, la direction axiale peut correspondre à un axe de rotation d'un obturateur, ou à une direction de translation de fermeture d'un obturateur. La direction transversale ou radiale est perpendiculaire à la direction axiale.

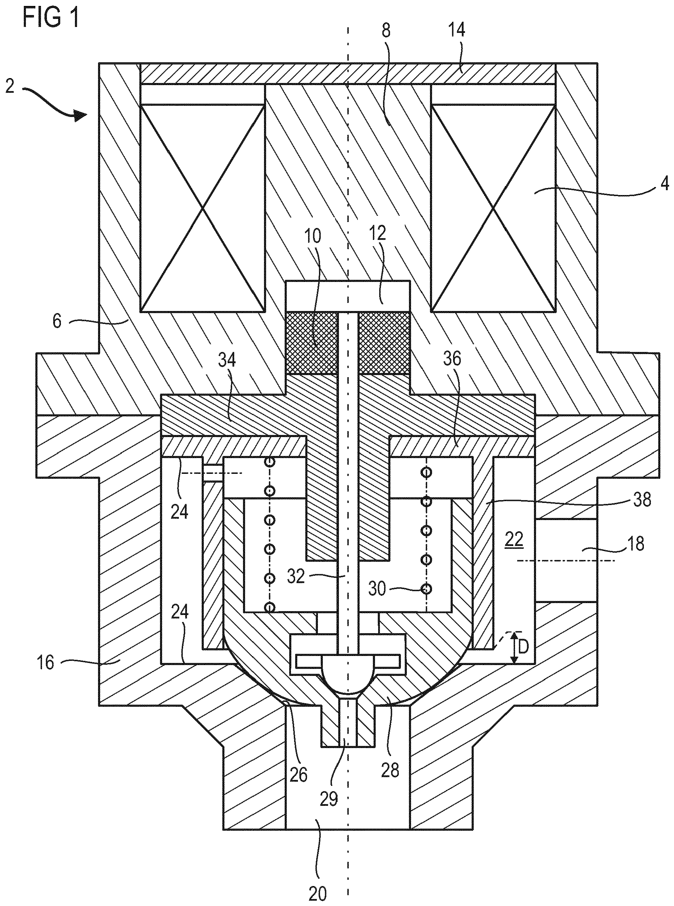

La figure 1 représente une vanne selon l'invention, elle est ici représentée en position fermée. Elle peut être monostable ou bistable. Elle peut être employée dans le domaine aérospatial, et résister à des vibrations d'au moins 20 g.

La vanne 2 peut être une électrovanne. La vanne 2 peut comprendre un actionneur du type solénoïde ou tout autre actionneur équivalent. Elle peut comprendre un circuit magnétique avec une bobine 4 et une carcasse 6 qui canalise le flux autour des spires de la bobine 4. La bobine 4 peut être doublée pour augmenter la fiabilité, et/ou pour rendre la vanne bistable. La carcasse 6 peut comprendre un noyau 8 disposé à l'intérieur de la bobine 4. De manière alternative, le noyau 8 peut être rapporté dans la carcasse 6.

La vanne 2 peut également comprendre un plongeur 10 mobile, qui est éventuellement disposé à l'intérieur de la carcasse 6. Le plongeur 10 et le noyau 8 définissent un entrefer 12 qui est ouvert lorsque la bobine 4 n'est pas alimentée, et qui se ferme, éventuellement par étapes, lors de l'alimentation de l'actionneur. La vanne 2 peut également comprendre un aimant permanent ou un ressort (non représentés) pour maintenir le plongeur 10 dans une position voulue, telle la position fermée. Un capot 14 peut être employé pour enfermer de manière étanche chaque bobine 4 dans la carcasse 6. Il est entendu que la carcasse, son noyau, le plongeur peuvent être réalisés en matériau ferromagnétique.

La vanne 2 comprend en outre un corps 16, qui peut être un couvercle éventuellement fixé à la carcasse. Le corps 16 comprend une entrée principale 18 éventuellement orientée radialement, une sortie principale 20 éventuellement orientée axialement, et un passage principal 22 pour relier l'entrée principale 18 à la sortie principale 20. L'entrée principale 18 est raccordée à une source de fluide, par exemple un gaz haute-pression, éventuellement cryogénique. Par haute pression, on entend une pression supérieure à 50 bars, préférentiellement supérieure à 100 bars, plus préférentiellement supérieure à 400 bars. Le passage principal 22 peut présenter une chambre principale, éventuellement de forme cylindrique. La chambre principale peut comprendre deux parois 24 opposées axialement, dont l'une entoure le siège principal 26, et l'autre est du côté de l'actionneur. La chambre principale peut être cylindrique.

La vanne 2 comprend également un obturateur principal 28 pour couper la circulation du fluide dans le passage principal 22. L'obturateur principal 28 coopère avec le siège principal 26 formé dans le corps 16 à l'intérieur du passage principal 22 du côté de la sortie principale 20. L'obturateur principal 28 peut être mobile en translation. Il présente une forme généralement cylindrique, et éventuellement creuse. Il comporte une entrée auxiliaire, une sortie auxiliaire 29, et un passage auxiliaire pour relier l'entrée auxiliaire à la sortie auxiliaire. Les sorties 20 et 29 peuvent être en communication, éventuellement directe. La vanne 2 peut comprendre un ressort 30 pour maintenir l'obturateur principal en position fermée. Le passage auxiliaire peut présenter une forme plate, telle une forme générale de disque. Sa hauteur axiale peut être inférieure ou égale à la largeur transversale.

La vanne 2 comprend un obturateur auxiliaire 32 pour couper le passage auxiliaire. Il est actionné par l'actionneur. Une de ses extrémités peut être fixée au plongeur 10. L'obturateur auxiliaire 32 peut occuper la majorité du volume du passage auxiliaire, préférentiellement la majorité du volume du disque de la chambre. La vanne 2 peut comprendre un guide auxiliaire 34 pour l'obturateur auxiliaire 32. Ce guide 34 peut comprendre une portée de guidage dans laquelle coulisse une tige de commande de l'obturateur auxiliaire. Le fluide peut s'infiltrer entre la tige et la portée de guidage jusqu'à l'entrefer, de sorte que la pression du fluide à l'entrée principale 18 exerce une poussée axiale sur la tige vers la position fermée. Le guide auxiliaire 34 peut former une butée pour le plongeur 10.

La vanne 2 peut comprendre un guide principal 36 pour l'obturateur principal. Ce guide principal 36 peut présenter une cloison 38, éventuellement en forme de tube, dont la surface intérieure est en contact de la surface extérieure de l'obturateur principal 28. Le guide principal 36 peut s'étendre sur la majorité axiale de l'obturateur principal 28, à la fois dans la position ouverte et dans la position fermée. La cloison 38 peut s'étendre axialement sur la majorité de la chambre principale. Elle peut s'étendre d'une paroi 24 vers l'autre paroi 24 de la chambre principale, jusqu'à une distance D de l'autre paroi 24. Le guide principal 36 est à distance radialement des parois latérales du passage principal 22. Les guides (34; 36) peuvent être en contact l'un de l'autre. Les obturateurs (28 ; 32) et les guides (34 ; 36), éventuellement le guide principal associé à l'obturateur principal, peuvent définir une cavité essentiellement close.

La circulation de fluide peut exercer une pression dynamique qui exerce un effort d'ouverture sur l'obturateur principal 28, ce qui permet de l'ouvrir plus que ce que l'obturateur auxiliaire 32 ne le permet seul. Les obturateurs sont chacun mobile entre, au moins, une position ouverte à distance du siège 26 correspondant, et une position fermée en contact du siège 26 correspondant. La course de l'obturateur principal 28 peut être supérieure la course de l'obturateur auxiliaire 32. La distance D peut être inferieure à la course de l'obturateur principal 28 et/ou de l'obturateur auxiliaire 32 entre sa/leur position ouverte et sa/leur position fermée.

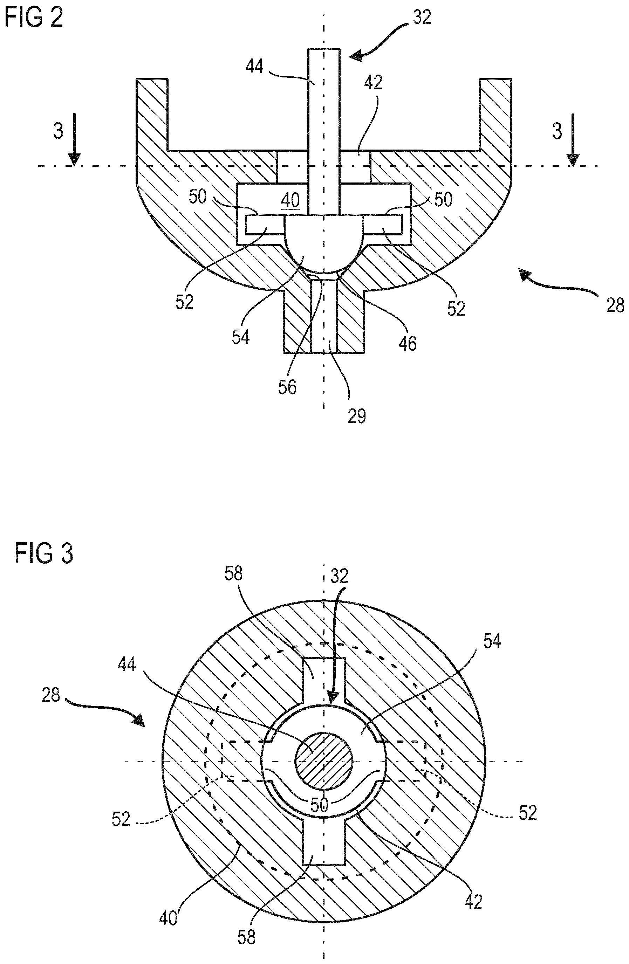

La figure 2 montre un agrandissement des obturateurs, l'obturateur auxiliaire 32 étant représenté en position fermée par rapport à l'obturateur principal 28.

L'obturateur auxiliaire 32 est disposé dans l'obturateur principal 28, de sorte à occuper le passage auxiliaire 40, il peut traverser l'entrée auxiliaire 42 avec sa tige de commande 44, et éventuellement traverser le passage principal. Grâce à ses formes, il permet de réguler l'écoulement dans le passage auxiliaire 40. L'obturateur auxiliaire 32 est mobile, par exemple par translation. Il peut également balayer ses positions selon une rotation, tout comme le pourrait l'obturateur principal.

L'obturateur auxiliaire 32 comprend une surface de fermeture 46 du passage auxiliaire 40. Lorsque la surface de fermeture 46 est en contact du siège auxiliaire 56 de l'obturateur principal 28, elle peut à la fois y couper la circulation, et maintenir l'obturateur principal 28 en position fermée. Elle peut également entraîner l'obturateur principal 28 dans le sens de la fermeture. L'obturateur auxiliaire 32 assure une fonction d'actionneur de l'obturateur principal. La tige d'actionnement 44 permet de relier mécaniquement le plongeur 10 à la surface de fermeture 46.

L'obturateur auxiliaire 32 comprend en outre au moins une surface d'entraînement 50 pour entraîner l'obturateur principal 28 dans le sens de l'ouverture. Pour cela, la surface d'entraînement 50 prend appui contre l'obturateur principal 28, au niveau de l'entrée auxiliaire 42 en la bouchant partiellement. Elle peut couper le bord de l'entrée auxiliaire 42. Ainsi, la surface d'entraînement 50 bouche localement l'entrée auxiliaire 42 et y limite l'écoulement. La surface d'entraînement 50 peut diviser le flux dans l'entrée auxiliaire 42, par exemple en étant en contact de son bord.

La surface d'entraînement 50 et surface de fermeture 46 peuvent être réunies sur une même portion d'entraînement de l'obturateur principal 28. Cette portion d'entraînement peut être logée dans le passage auxiliaire 40. La surface d'entraînement 50 et surface de fermeture 46 sont disposées sur des faces axialement opposées de la portion d'entraînement, elles peuvent être décalées axialement, et regardent chacune dans un sens opposé à l'autre surface des deux surfaces.

L'obturateur auxiliaire 32 peut comprendre au moins une patte d'entraînement 52, par exemple deux ou d'avantage. Les pattes d'entraînement 52 peuvent être réparties angulairement sur le tour de l'obturateur auxiliaire 32. La surface d'entraînement 50 peut être disposée sur la patte d'entrainement 52, ou être divisée sur la pluralité de pattes d'entraînement 52, éventuellement pour créer un entraînement équilibré et/ou réparti. Chaque patte d'entraînement 52 s'étend transversalement par rapport à la direction de déplacement de l'obturateur auxiliaire 32.

L'obturateur auxiliaire 32 peut comprendre une tête 54 sur laquelle est formée la surface de fermeture 46. La surface de fermeture 46 peut coopérer avec le siège auxiliaire 56 formé sur l'obturateur principal 28, afin de couper la circulation dans le passage auxiliaire 40. La tête 54 peut occuper la majorité du volume intérieur du passage auxiliaire 40. Elle forme à la fois un bouchon et un élément de régulation du flux par perte de charge. Elle peut accentuer l'étranglement entre la tige 44 et le bord de l'entrée auxiliaire 42. Son contour correspond généralement à celui de l'entrée auxiliaire 42, en étant toutefois de taille inférieure de sorte à pouvoir y être insérée. Son contour peut être localement supérieur, et être monté en force. Les pattes d'entraînement 52 peuvent être reliées et/ou conformées avec la tête 54. Les pattes d'entraînement 52 et la tête 54 peuvent présenter un plan commun, dont une portion forme la surface d'entraînement 50.

La figure 3 ébauche une coupe des obturateurs selon l'axe 3-3 tracé sur la figure 2.

Le contour de l'entrée auxiliaire 42 de l'obturateur principal 28 présente au moins une encoche 58, préférentiellement plusieurs encoches 58 dont la forme épouse généralement celui de la surface d'entraînement 50, ou ceux des portions de surfaces d'entraînement. Dans le cas ou chaque surface d'entraînement 50 est portée par une ou plusieurs pattes d'entraînement 52, le contour de 'encoche 58 ou de chaque encoche 58 correspond à celui de chaque patte d'entraînement 52, en étant sensiblement plus grand. Cette architecture authorise un montage du type baïonnette des obturateurs. L'obturateur auxiliaire 32 est introduit axialement dans l'obturateur principal 28, puis pivoté d'une fraction de tour pour permettre une rétention axiale. La forme de disque du passage auxiliaire 40 est avantageuse puisqu'elle permet une rotation de l'obturateur auxiliaire 32. Des moyens de blocage en rotation des obturateurs peuvent être prévus dans la vanne.

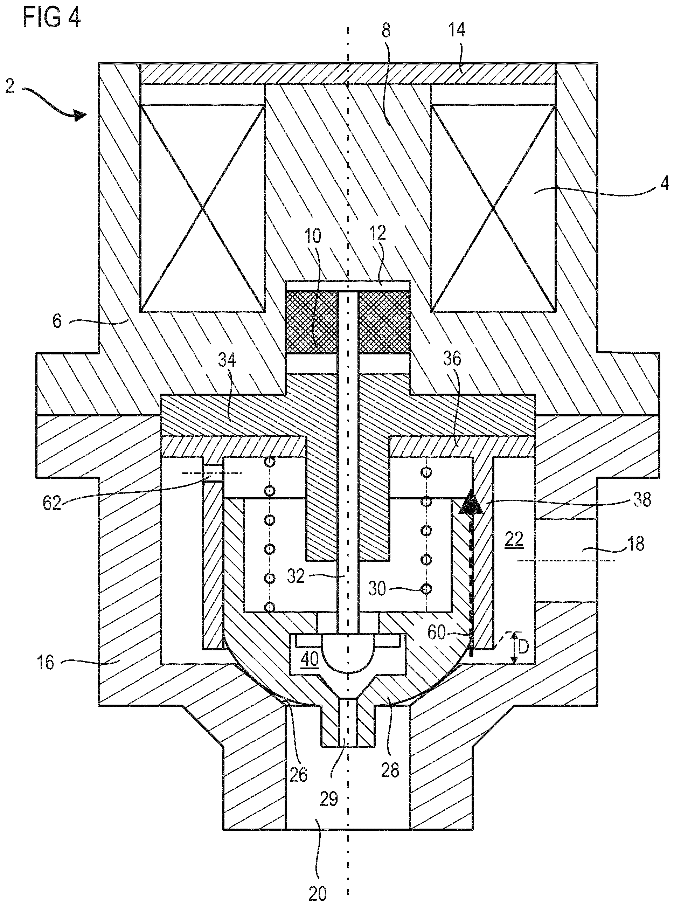

La figure 4 représente une étape intermédiaire de l'ouverture de la vanne. L'obturateur principal reste dans sa position fermée tandis que l'obturateur auxiliaire a quitté son siège et est en position ouverte.

Dans l'étape intermediaire, le plongeur 10 s'éloigne du guide auxiliaire 34 et est attiré vers le noyau 8. L'entrefer 12 se ferme partiellement, mais reste ouvert. Un début d'écoulement reduit traverse le passage auxiliaire 40.

Lors de cette étape intermédiaire, l'obturateur auxiliaire 32 s'est déplacé jusqu'à venir en butée contre une face du passage auxiliaire 40 qui est à l'opposé du siège auxiliaire 56. Il a ouvert le passage auxiliaire 40 de sorte à permettre une communication dans le passage auxiliaire. Cette ouverture peut permettre une diminution de pression dans l'obturateur principal 28.

Le contact entre le guide principal 36 et l'obturateur principal 28 peut être un contact généralement étanche. Ce contact peut rester étanche jusqu'à atteindre une pression seuil, par exemple d'au moins 50 bars, préférentiellement d'au moins 100 bars, plus préférentiellement d'au moins 200 bars, éventuellement d'au moins 400 bars. Cette étanchéité peut être plus faible qu'entre l'obturateur principal 28 et le siège principal 26. Ainsi, lorsque la vanne 2 est en position intermédiaire et qui la différence de pression entre l'entrée principale 18 et la sortie principale 20 est supérieure à la pression seuil, une fuite auxiliaire 60 peut apparaître à l'interface. Elle contribue à l'équilibre des pressions de part et d'autre de l'obturateur principal 28, de sorte à réduire l'effort d'actionnement dans le sens de l'ouverture depuis sa position fermée.

En complément ou en alternative, la cloison du guide principal peut présenter un orifice 62, qui peut permettre une communication entre l'extérieur de la cloison 38 et l'intérieur de la forme creuse de l'obturateur principal. Lorsque l'obturateur auxiliaire 32 est ouvert, il y a équilibre des pressions de part et d'autre de l'obturateur principal, ce qui en facilite l'actionnement.

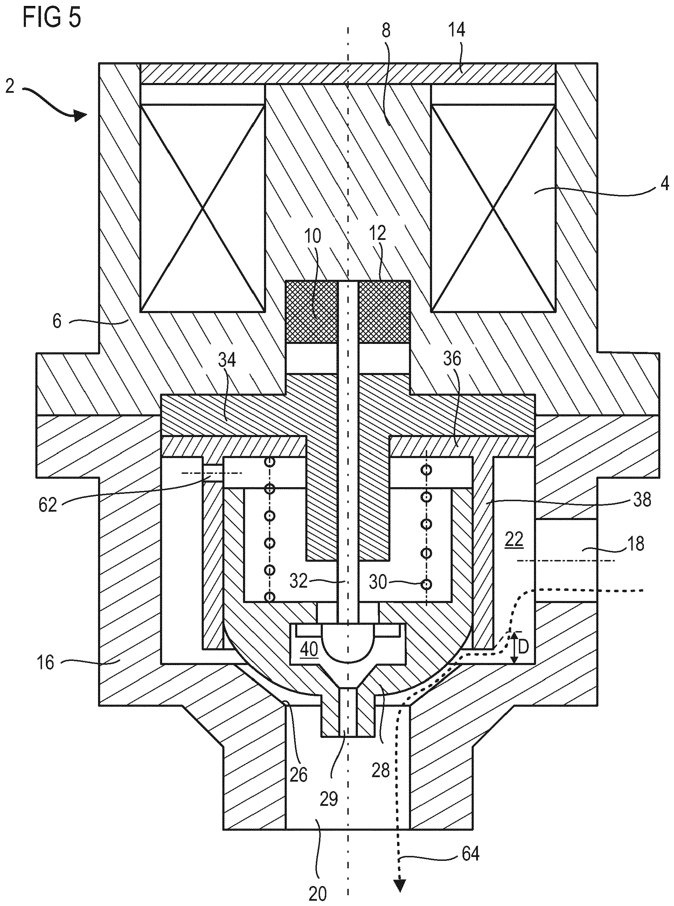

La figure 5 représente l'état d'ouverture de la vanne, l'obturateur principal et l'obturateur auxiliaire étant tous deux en position ouverte par rapport à leurs sièges respectifs.

Dans cet état, le plongeur 10 vient en contact du noyau 8. L'entrefer 12 est fermé grâce à la force magnétique. Le ressort 30 peut maintenir en contact l'obturateur principal 28 et la surface d'entraînement.

L'obturateur auxiliaire 32 a fini sa course, entraînant au passage l'obturateur principal 28 à distance de son siège principal 26. Ainsi, le passage principal 22 est ouvert, et permet une circulation principale 64.

Suivant une alternative de l'invention, la pression dynamique de la circulation principale peut exercer un effort sur l'obturateur principal de sorte à l'ouvrir d'avantage. Cette pression peut écarter l'obturateur principal de la surface d'entraînement, éventuellement l'obturateur principal peut continuer son mouvement d'ouverture jusqu'à venir en butée de la surface de fermeture de l'obturateur auxiliaire, et/ou de l'une des faces de la paroi 24 du passage principal 22.

## Revendications

1. Vanne (2), notamment pour gaz cryogénique, la vanne (2) comprenant :
- un corps (16) avec une entrée principale (18), une sortie principale (20) et un passage principal (22) qui relie l'entrée principale à la sortie principale;
- un obturateur principal (28) du passage principal (22), l'obturateur principal comportant une entrée auxiliaire (42), une sortie auxiliaire (29) en communication avec la sortie principale, et un passage auxiliaire (40) qui relie l'entrée auxiliaire à la sortie auxiliaire,
- un obturateur auxiliaire (32) comprenant une surface de fermeture (46) configurée pour couper le passage auxiliaire (40) et pour entraîner l'obturateur principal (28) dans le sens de fermeture,
l'obturateur auxiliaire (32) comprend, en outre, une surface d'entraînement (50) configurée pour entraîner l'obturateur principal (28) dans le sens de l'ouverture en prenant appui sur le bord de l'entrée auxiliaire (42) et en la bouchant partiellement afin d'y freiner un écoulement ;
**caractérisée en ce que**
l'obturateur auxiliaire (32) comprend au moins une patte d'entraînement (52) faisant saillie transversalement par rapport à la direction de déplacement de l'obturateur auxiliaire (32), la surface d'entraînement (50) étant disposée sur la au moins une patte d'entraînement (52).

2. Vanne (2) selon la revendication 1, **caractérisée en ce que** le bord de l'entrée auxiliaire (42) de l'obturateur principal (28) comprend au moins une encoche (58) dont le contour correspond à celui de la au moins patte d'entraînement (52) de sorte à permettre l'insertion de chaque patte d'entraînement à l'intérieur du passage auxiliaire (40), la patte d'entraînement étant décalé angulairement par rapport à l'encoche.

3. Vanne (2) selon l'une des revendications 1 à 2, **caractérisée en ce que** l'obturateur auxiliaire (32) comprend plusieurs pattes d'entraînements (52) réparties angulairement autour de l'obturateur auxiliaire, chacune avec une portion de surface d'entraînement (50), préférentiellement l'obturateur principal comprend des encoches associées aux pattes d'entraînement de sorte à former un accouplement baïonnette.

4. Vanne (2) selon l'une des revendications 1 à 3, **caractérisée en ce que** l'obturateur auxiliaire (32) comprend une tige de commande (44) traversant l'entrée auxiliaire (42), et une tête (54) sur laquelle est formée la surface de fermeture (46), la surface d'entraînement étant reliée à la tige de commande via la tête.

5. Vanne (2) selon la revendication 4, **caractérisée en ce que** la tête (54) s'étend sur la majorité de la section de passage de l'entrée auxiliaire (42), et/ou la tête (54) occupe la majorité du volume du passage auxiliaire (40).

6. Vanne (2) selon l'une des revendications 4 à 5, **caractérisée en ce que** le contour de la tête (54) épouse le contour de l'entrée auxiliaire (42), la tête étant configurée de sorte à ce que lorsque la surface d'entraînement (50) est en contact de l'obturateur principal (28), la tête est au niveau axialement de l'entrée auxiliaire de sorte à y créer une perte de charge.

7. Vanne (2) selon l'une des revendications 1 à 6, **caractérisée en ce que** le passage auxiliaire (40) présente généralement une forme de disque, l'obturateur auxiliaire (32) occupant la majorité du volume du disque.

8. Vanne (2) selon l'une des revendications 1 à 7, **caractérisée en ce que** l'entrée auxiliaire (42) présente un espace qui entoure l'obturateur auxiliaire (32), le bord de l'entrée auxiliaire forme un rétrécissement annulaire au niveau du passage auxiliaire.

9. Vanne (2) selon l'une des revendications 1 à 8, **caractérisée en ce que** l'obturateur auxiliaire (32) comprend une portion d'entraînement, la surface de fermeture (46) et la surface d'entraînement (50) étant disposées sur des faces axialement opposées de la portion d'entraînement et qui sont orientées dans des sens opposés auxdites surfaces.

10. Vanne (2) selon l'une des revendications 1 à 9, **caractérisée en ce qu'**elle comprend un guide principal (36) pour guider l'obturateur principal (28) à l'aide d'une cloison (38) de guidage sur laquelle glisse l'obturateur principal, l'obturateur principal étant majoritairement enveloppé dans la cloison de guidage dans la position fermée, le contact entre l'obturateur principal (28) et le guide principal (36) est généralement étanche, préférentiellement le contact étanche est configuré pour permettre un écoulement de fluide à partir d'une pression supérieure à 50 bars, plus préférentiellement supérieure à 100 bars.

11. Vanne (2) selon la revendication 10, **caractérisée en ce que** la cloison de guidage comprend un orifice (62) disposé à distance de l'obturateur principal (28) lorsque ce dernier est en position fermée, préférentiellement l'orifice (62) est fermé lorsque l'obturateur principal est en position ouverte.

12. Vanne (2) selon l'une des revendications 1 à 11, **caractérisée en ce que** le passage principal (22) comprend deux parois (24) opposées selon le sens de déplacement de l'obturateur principal (28), la cloison (38) de guidage s'étend depuis une paroi (24) vers l'autre paroi (24) jusqu'à une distance D de l'autre paroi, la distance D étant inférieure à la course de l'obturateur principal (28) et/ou de l'obturateur auxiliaire (32) entre sa/leur position ouverte et sa/leur position fermée, préférentiellement en position ouverte, l'obturateur principal et le guide principal définissent une enceinte généralement close.

13. Vanne (2) selon l'une des revendications 1 à 12, **caractérisée en ce que** le passage principal (22) comprend une chambre principale dans laquelle est logé l'obturateur principal (28), l'obturateur principal (28) étant mobile en translation d'une extrémité à l'autre de la chambre principale.

14. Electrovanne comprenant une vanne (2) pour gaz, **caractérisé en ce que** la vanne (2) est conforme à l'une des revendications 1 à 13, l'électrovanne comprend un actionneur électromagnétique avec au moins un solénoïde, un circuit magnétique pour canaliser le flux magnétique du solénoïde, le circuit comportant un noyau (8) ferromagnétique et un plongeur (10) ferromagnétique auquel est relié l'obturateur auxiliaire (32), l'électrovanne étant configurée de sorte que dans l'état fermé, la différence de pression entre l'entrée principale et la sortie principale exerce un effort de fermeture sur le plongeur qui maintient l'électrovanne fermée à l'aide de l'obturateur principal (28) et de l'obturateur auxiliaire (32).

## Patentansprüche

1. Ventil (2), insbesondere für ein kryogenes Gas, wobei das Ventil (2) folgendes umfasst:
- einen Körper (16) mit einem Haupteingang (18), einem Hauptausgang (20) und einem Hauptdurchgang (22), der den Haupteingang mit dem Hauptausgang verbindet;
- einen Hauptverschluss (28) für den Hauptdurchgang (22), wobei der Hauptverschluss einen Hilfseingang (42), einen Hilfsausgang (29), der mit dem Hauptausgang kommuniziert und einen Hilfsdurchgang (40), der den Hilfseingang mit dem Hilfsausgang verbindet, beinhaltet,
- einen Hilfsverschluss (32), der eine Verschlussfläche (46) beinhaltet, die konfiguriert ist, um den Hilfsdurchgang (40) zu unterbrechen und um den Hauptverschluss (28) in Verschlussrichtung anzutreiben,
wobei der Hilfsverschluss (32) außerdem eine Antriebsfläche (50) beinhaltet, die konfiguriert ist, um den Hauptverschluss (28) in Öffnungsrichtung anzutreiben, indem er sich auf den Rand des Hilfseingangs (42) stützt und diesen teilweise verschließt, um einen Abfluss abzubremsen;
**dadurch gekennzeichnet, dass**
der Hilfsverschluss (32) mindestens einen Mitnehmer (52) beinhaltet, der im Verhältnis zur Bewegungsrichtung des Hilfsverschlusses (32) quer hervorsteht, wobei die Antriebsfläche (50) auf dem mindestens einen Mitnehmer (52) angeordnet ist.

2. Ventil (2) nach Anspruch 1, **dadurch gekennzeichnet, dass** der Rand des Hilfseingangs (42) des Hauptverschlusses (28) mindestens eine Einkerbung (58) aufweist, deren Kontur derjenigen des mindestens einen Mitnehmers (52) entspricht, so dass das Einsetzen jedes Mitnehmers in den Hilfsdurchgang (40) ermöglicht wird, wobei der Mitnehmer im Verhältnis zur Einkerbung winklig versetzt wird.

3. Ventil (2) nach einem der Ansprüche 1 bis 2, **dadurch gekennzeichnet, dass** der Hilfsverschluss (32) mehrere Mitnehmer (52) beinhaltet, die sich winklig um den Hilfsverschluss herum verteilen, jeder mit einem Teil der Antriebsfläche (50), wobei der Hauptverschluss vorzugsweise Einkerbungen beinhaltet, die den Mitnehmern zugeordnet sind, um einen Bajonettverschluss zu bilden.

4. Ventil (2) nach einem der Ansprüche 1 bis 3, **dadurch gekennzeichnet, dass** der Hilfsverschluss (32) einen Steuerstab (44) beinhaltet, der den Hilfseingang (42) durchquert, und einen Kopf (54) auf dem die Verschlussfläche (46) ausgebildet ist, wobei die Antriebsfläche anhand des Kopfes mit dem Steuerstab verbunden ist.

5. Ventil (2) nach Anspruch 4, **dadurch gekennzeichnet, dass** sich der Kopf (54) über den größten Teil des Durchgangsquerschnitts des Hilfseingangs (42) erstreckt und/oder der Kopf (54) den größten Teil des Volumens des Hilfsdurchgangs einnimmt (40).

6. Ventil (2) nach einem der Ansprüche 4 und 5, **dadurch gekennzeichnet, dass** sich die Kontur des Kopfes (54) an die Kontur des Hilfseingangs (42) anschmiegt, wobei der Kopf so konfiguriert ist, dass wenn die Antriebsfläche (50) mit dem Hauptverschluss (28) in Kontakt ist, der Kopf sich axial auf Höhe des Hilfseingangs befindet, um dort einen Druckverlust zu erzeugen.

7. Ventil (2) nach einem der Ansprüche 1 bis 6, **dadurch gekennzeichnet, dass** der Hilfsdurchgang (40) eine allgemein scheibenförmige Form aufweist, wobei der Hilfsverschluss (32) den größten Teil des Volumens der Scheibe einnimmt.

8. Ventil (2) nach einem der Ansprüche 1 bis 7, **dadurch gekennzeichnet, dass** der Hilfseingang (42) einen Raum besitzt, der den Hilfsverschluss (32) umgibt, wobei der Rand des Hilfseingangs einen ringförmigen Rücksprung im Bereich des Hilfsdurchgangs bildet.

9. Ventil (2) nach einem der Ansprüche 1 bis 8, **dadurch gekennzeichnet, dass** der Hilfsverschluss (32) einen Antriebsteil beinhaltet und die Verschlussfläche (46) und die Antriebsfläche (50) auf axial gegenüberliegenden Flächen des Antriebsteils angeordnet und in entgegengesetzter Richtung zu den genannten Flächen ausgerichtet sind.

10. Ventil (2) nach einem der Ansprüche 1 bis 9, **dadurch gekennzeichnet, dass** es eine Hauptführung (36) beinhaltet, um den Hauptverschluss (28) mithilfe einer Führungstrennwand (38) zu lenken, auf der der Hauptverschluss gleitet, wobei der Hauptverschluss in geschlossener Position mehrheitlich von der Führungstrennwand umgeben ist und der Kontakt zwischen dem Hauptverschluss (28) und der Hauptführung (36) im Allgemeinen dicht ist und der dichte Kontakt vorzugsweise konfiguriert ist, um ein Abfließen des Mediums ab einem Druck von mehr als 50 bar, bevorzugt von mehr als 100 bar zu ermöglichen.

11. Ventil (2) nach Anspruch 10, **dadurch gekennzeichnet, dass** die Führungstrennwand eine Öffnung (62) beinhaltet, die in einigem Abstand vom Hauptverschluss (28) angeordnet ist, wenn sich letzterer in geschlossener Position befindet, wobei die Öffnung (62) vorzugsweise geschlossen ist, wenn sich der Hauptverschluss in geöffneter Position befindet.

12. Ventil (2) nach einem der Ansprüche 1 bis 11, **dadurch gekennzeichnet, dass** der Hauptdurchgang (22) zwei gegenüberliegende Wandungen (24) in Bewegungsrichtung des Hauptverschlusses (28) aufweist, wobei sich die Führungstrennwand (38) von einer Wandung (24) zur anderen Wandung (24) erstreckt, bis zu einem Abstand D von der anderen Wandung, wobei der Abstand D kleiner ist, als der Arbeitsweg des Hauptverschlusses (28) und/oder des Hilfsverschlusses (32) zwischen seiner/ihrer geöffneten Position und seiner/ihrer geschlossenen Position, wobei der Hauptverschluss und die Hauptführung in geöffneter Position vorzugsweise einen allgemein geschlossenen Raum umschreiben.

13. Ventil (2) nach einem der Ansprüche 1 bis 12, **dadurch gekennzeichnet, dass** der Hauptdurchgang (22) eine Hauptkammer beinhaltet, in der der Hauptverschluss (28) untergebracht ist, wobei der Hauptverschluss (28) von einem Ende zum anderen der Hauptkammer beweglich verschiebbar ist.

14. Elektroventil mit einem Ventil (2) für Gase, **dadurch gekennzeichnet, dass** das Ventil (2) einem der Ansprüche 1 bis 13 entspricht und das Elektroventil ein elektromagnetisches Stellglied mit mindestens einer Magnetspule und einen Magnetschaltkreis für die Kanalisierung des Magnetstroms der Magnetspule beinhaltet, wobei der Schaltkreis einen ferromagnetischen Kern (8) und einen ferromagnetischen Kolben (10) aufweist, an den der Hilfsverschluss (32) angeschlossen ist, wobei das Elektroventil so konfiguriert ist, dass im geschlossenen Zustand der Druckunterschied zwischen dem Haupteingang und dem Hauptausgang eine Verschlusskraft auf den Kolben ausübt, der das Elektroventil mithilfe des Hauptverschlusses (28) und des Hilfsverschlusses (32) geschlossen hält.

## Claims

1. Valve (2), in particular for a cryogenic gas, the valve (2) comprising:
- a body (16) with a main inlet (18), a main outlet (20) and a main passage (22) which connects the main inlet to the main outlet;
- a main shutter (28) for the main passage (22), the main shutter comprising an auxiliary inlet (42), an auxiliary outlet (29) in communication with the main outlet, and an auxiliary passage (40) which connects the auxiliary inlet to the auxiliary outlet;
- an auxiliary shutter (32) comprising a closing surface (46) configured to shut off the auxiliary passage (40) and to drive the main shutter (28) in the closing direction,
the auxiliary shutter (32) also comprises a drive surface (50) configured to drive the main shutter (28) in the opening direction while resting on the edge of the auxiliary inlet (42) and blocking it partially in order to brake the flow there;
**characterized in that**
the auxiliary shutter (32) comprises at least one drive lug (52) protruding transversely relative to the direction of movement of the auxiliary shutter (32), the drive surface (50) being arranged on the at least one drive lug (52).

2. Valve (2) according to claim 2, **characterized in that** the edge of the auxiliary inlet (42) of the main shutter (28) comprises at least one notch (58), the contour of which corresponds to that of the at least one drive lug (52) so as to allow insertion of each drive lug inside the auxiliary passage (40), the drive lug being offset angularly relative to the notch.

3. Valve (2) according to any of claims 2 to 3, **characterized in that** the auxiliary shutter (32) comprises several drive lugs (52) angularly distributed around the auxiliary shutter, each with a portion of the drive surface (50), preferably the main shutter comprises notches associated with the drive lugs so as to form a bayonet coupling.

4. Valve (2) according to any of claims 1 to 4, **characterized in that** the auxiliary shutter (32) comprises a control rod (44) passing through the auxiliary inlet (42), and a head (54) on which the closing surface (46) is formed, the drive surface being linked to the control rod via the head.

5. Valve (2) according to claim 5, **characterized in that** the head (54) extends over the majority of the passage section of the auxiliary inlet (42), and/or the head (54) occupies the majority of the volume of the auxiliary passage (40).

6. Valve (2) according to any of claims 5 to 6, **characterized in that** the contour of the head (54) follows the contour of the auxiliary inlet (42), the head being configured such that when the drive surface (50) is in contact with the main shutter (28), the head is axially level with the auxiliary inlet so as to create a pressure loss there.

7. Valve (2) according to any of claims 1 to 7, **characterized in that** the auxiliary passage (40) generally takes the form of a disc, the auxiliary shutter (32) occupying the majority of the disc volume.

8. Valve (2) according to any of claims 1 to 8, **characterized in that** the auxiliary inlet (42) has a space which surrounds the auxiliary shutter (32), the edge of the auxiliary inlet forming an annular contraction at the auxiliary passage.

9. Valve (2) according to any of claims 1 to 9, **characterized in that** the auxiliary shutter (32) comprises a drive portion, the closing surface (46) and the drive surface (50) being arranged on axially opposing faces of the drive portion which are oriented in opposite directions to said surfaces.

10. Valve (2) according to any of claims 1 to 10, **characterized in that** it comprises a main guide (36) to guide the main shutter (28) by means of a guide partition (38) on which the main shutter slides, the majority of the main shutter being encased in the guide partition in the closed position, the contact between the main shutter (28) and the main guide (36) generally being sealed, preferably the sealed contact is configured to allow a fluid flow above a pressure greater than 50 bar, more preferably greater than 100 bar.

11. Valve (2) according to claim 11, **characterized in that** the guide partition comprises an orifice (62) arranged remotely from the main shutter (28) when the latter is in the closed position, preferably the orifice (62) is closed when the main shutter is in the open position.

12. Valve (2) according to any of claims 1 to 12, **characterized in that** the main passage (22) comprises two opposing walls (24) in the direction of movement of the main shutter (28), the guide partition (38) extends from one wall (24) towards the other wall (24) up to a distance D from the other wall, the distance D being less than the stroke of the main shutter (28) and/or the auxiliary shutter (32) between the open position and the closed position, preferably in the open position the main shutter and the main guide define a generally enclosed area.

13. Valve (2) according to any of claims 1 to 13, **characterized in that** the main passage (22) comprises a main chamber in which the main shutter (28) is housed, the main shutter (28) being mobile in translation from one end of the main chamber to the other.

14. Electrovalve comprising a valve (2) for gas, **characterized in that** the valve (2) is in accordance with any of claims 1 to 14, the electrovalve comprises an electromagnetic actuator with at least one solenoid, a magnetic circuit for channelling the magnetic flux of the solenoid, the circuit comprising a ferromagnetic core (8) and a ferromagnetic plunger (10) to which the auxiliary shutter (32) is connected, the electrovalve being configured such that in the closed state, the pressure difference between the main inlet and the main outlet exerts a closing force on the plunger which holds the electrovalve closed by means of the main shutter (28) and the auxiliary shutter (32).
